# EUROPEAN PATENT SPECIFICATION

(11) **EP 2 124 654 B1**
(45) Date of publication and mention of the grant of the patent: **29.01.2020**
(21) Application number: 07862559.7
(22) Date of filing: 05.12.2007
(51) Int. Cl.: A23P 30/00

(54) **TOFU PREPPER**
TOFU-AUFBEREITER
PRÉPARATEUR DE TOFU

(30) Priority: 22.03.2007 US 726548; 11.07.2007 US 827167
(43) Date of publication of application: 02.12.2009
(73) Proprietor: Kraft, Marie B., Ambler, PA 19002 (US)
(72) Inventor: Kraft, Marie B., Ambler, PA 19002 (US)
(74) Representative: Jörgensson, Leif Sixten
(86) International application number: PCT/US2007/024930
(87) International publication number: WO 2008/118157

(56) References cited:
- WO-A1-86/02805
- JP-A- H10 290 679
- JP-U- S5 560 792
- JP-U- S5 944 286
- JP-U- S55 108 890
- US-A- 5 058 494
- US-A- 5 123 795
- US-A- 5 678 721
- US-A- 5 701 810

## Description

### TECHNICAL FIELD

The present invention relates in general to the use of tofu, and, more particularly it concerns an apparatus and a method for accommodating and for removing excess water from a standard block of tofu as sold in stores.

### BACKGROUND

Many individuals have realized the health and wellness benefits that can be obtained by simply decreasing or completely eliminating meat from their diets. Some individuals may wish to eliminate meat from their diet for animal rights reasons, as well.

Tofu is a plant based protein source that many people turn to in order to create the right balance of nutrients in their diet. Thus, tofu is widely used as a substitute for the protein that is generally obtained from eating meat. However, tofu preparation can be inconvenient and messy as many recipes require the cook to squeeze excess moisture. From a block of tofu in order to prepare it. A block is the normal way that tofu is sold. Improperly prepped tofu can result in an inedible meal that can make some individuals completely give up on tofu as a meat alternative. Current methods of removing the moisture from a block of tofu include squeezing and pressing the tofu with paper towels and other heavier kitchen utensils that are generally inadequate and cumbersome and most do not always allow for storage of the tofu in the refrigerator. Thus, it would be advantageous if there were a means available that would provide those individuals who wish to remove meat from their diets a simple apparatus that can be used to easily remove excess moisture from blocks of tofu and provide a means of storing such prepared tofu.

Examples of known systems reflecting prior art are disclosed in JP-S5944286U, JP-S55108890U, JP-H10290679A and JP-S5560792U.

### SUMMARY

It is an object of the present invention to provide an apparatus for removing excess moisture from a block of tofu.

Another object of the present invention is to provide an apparatus for removing excess moisture from a block of tofu that is easy to use.

Still another object of the present invention is to provide an apparatus that is made of plastic for removing excess moisture from a block of tofu.

Yet another object of the present invention is to provide an apparatus for removing excess moisture from a block of tofu that uses a biasing means for applying pressure to such block of tofu and forcing the excess moisture out of such block of tofu.

These and various other objects and advantages of this invention will become apparent after a full reading of the following detailed description, particularly, when read in conjunction with the attached drawings as described below and the appended claims.

Subject to the present invention is an apparatus and a method having the features set forth in the appended independent claims preferred embodiments being defined in the dependent claims.

In a first aspect, there is provided an apparatus for removing excess moisture from blocks of tofu as commonly sold in grocery and health food stores. The apparatus comprises an open top container member for holding at least one block of tofu, such container member having a first predetermined shape and a predetermined inner surface area of a bottom wall of such open top container. A first means is disposed within the open top container having a bottom surface thereof for engagement with an upper surface of such at least one block of tofu. A biasing means has a first end thereof engageable with an upper surface of the first means for exerting a downward pressure thereon. A second means is
engageable with the open top container adjacent an open end thereof, a second end of such biasing means is engageable with the second means adjacent a surface thereof facing the upper surface of such first means and a third means is disposed adjacent opposed outer end of such second means for retaining such second means on the open top container while biasing such first means against such block of tofu.

In a second aspect, there is provided an apparatus for removing excess moisture from blocks of tofu as commonly sold in grocery and health food stores. The apparatus comprises a container member having a first predetermined shape and a first predetermined surface area. The container member is for holding at least one block of tofu. A pair of arm-like projections are disposed on upper surfaces and on opposite sides of the container member. A first substantially flat plate member having a second predetermined surface area which is less that the first predetermined surface area by an amount at least sufficient to allow moisture to flow to a surface above an upper surface of such tofu, the first substantially flat plate member is disposed inside the container member and placed on top of such at least one block of tofu. Such first substantially flat plate member having at least one raised portion on an upper surface thereof. A second substantially flat plate member engages the pair of arm-like projections. A handle member is disposed on an upper surface of
the second substantially flat plate member and a biasing means is caged between an inner surface of the handle member and such upper surface of the first substantially flat plate member for pressing excess moisture out of such at least one block oftofu.

In a third aspect, there is provided a method for removing excess moisture from blocks of tofu as commonly sold in grocery and health food stores. The method comprises the steps of providing a container member. Such first container member has a first predetermined shape and a first predetermined surface area and has a pair of arm-like projections disposed on upper surfaces and opposite sides of such container member. This is followed by a step of placing at least one block of tofu in the container member. The next step is placing a first substantially flat plat member inside the container member on top of such at least one block of tofu, such first substantially flat plate member having a second predetermined surface area which is less that such first predetermined surface area by an amount at least sufficient to allow moisture to flow to a surface above an upper surface of such tofu. Such first substantially flat plate member has at least one raised portion on an upper surface thereof. This is followed by the step of engaging a second substantially flat plate member having a handle member disposed on an upper surface thereof and having a biasing means connected to an inner surface of such handle member with the pair of arm-like projections disposed on upper surfaces and on opposite sides of the container member. There is a step of caging the biasing means between such at least one raised portion on the upper surface of the first substantially flat plate member and an inner surface of such handle member when the second substantially flat plate member is engaged with the pair of arm-like projections. A step of applying pressure on the block of tofu by the first substantially flat plate member. Such first substantially flat plate member being forced downward by the biasing means. The next step is removing water from the block of tofu by the pressure exerted by the first substantially flat plate member as a result of the action of the biasing means. Collecting the excess water removed from the block of tofu above such first substantially flat plate member and a step of storing the tofu in the container member, with excess water removed, in a refrigerated area until ready for use.

In a fourth aspect, there is provided an apparatus for removing excess moisture from blocks of tofu as commonly sold in grocery and health food stores. The apparatus comprises an outer container member having a first predetermined size and a first predetermined shape. An inner container member is disposed inside the outer container member for holding a block of tofu, such inner container member having a second predetermined size and a second predetermined shape, such inner container member having a plurality of apertures formed through a bottom portion of the inner container member. A pair of arm-like projections pointing in opposite directions are disposed on upper surfaces and on opposite sides of the inner container member. A first substantially flat plate member is disposed inside the inner container member and placed on top of such block of tofu, such first substantially flat plate member having at least one raised portion on an upper surface of the first substantially flat plate member. A second substantially flat plate member engages the pair of arm-like projections. There is at least one biasing means connected to a bottom surface of the second substantially flat plate member and is caged between the at least one raised portion on the upper surface of the first substantially flat plate member and the bottom surface of the second substantially flat plate member for pushing against such block of tofu for pressing excess moisture out of such block of tofu.

### BRIEF DESCRIPTION OF THE DRAWINGS

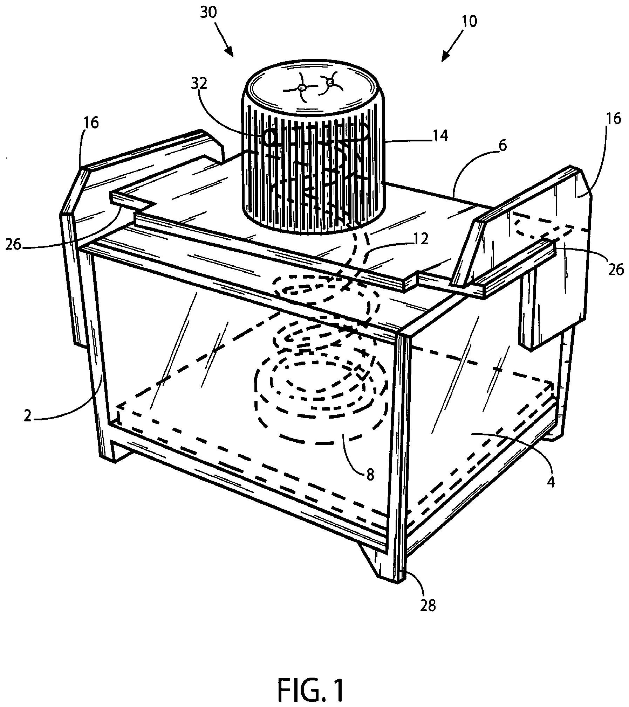

Figure 1 is a perspective view of the apparatus for use in removing excess water from a block of tofu according to an embodiment of the invention.

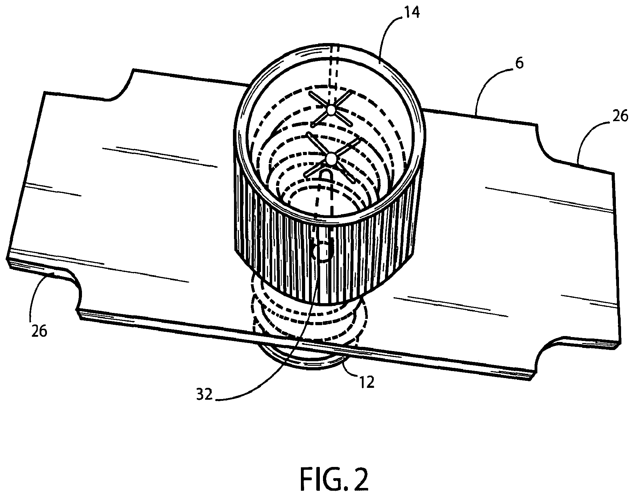

Figure 2 is a perspective view of a second plate member having a handle member formed thereon and with a biasing means attached as used in the embodiment shown in Figure 1.

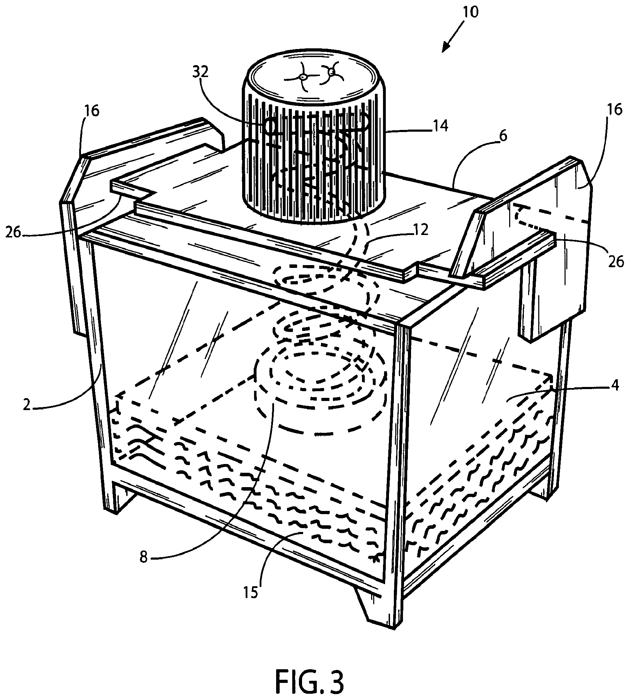

Figure 3 is a perspective view of the apparatus from a different angle showing the second plate member engaged with the projections on the upper surfaces of the container member and the block of tofu disposed in the open top container.
Figure 4 is a perspective view of the container member shown in Figure 1 with a lid member in place.

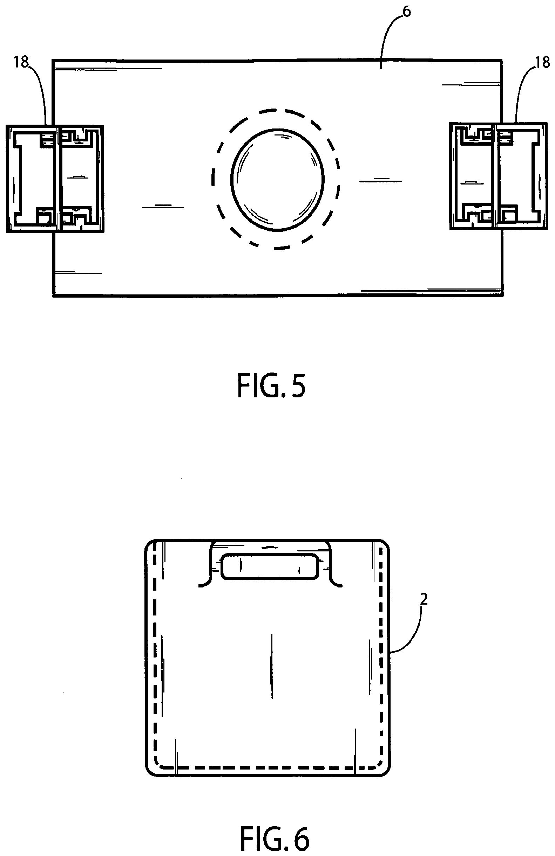

Figure 5 is a perspective view of the apparatus showing an alternate embodiment of the invention with a pivotable hinge engagable with the second plate member.
Figure 6 is a side view of the container member showing a notch formed therein for engagement with the pivotable hinge shown in Figure 5.
Figure 7 is a perspective view of the open top container with perforations disposed on a bottom thereof according to an alternate embodiment of the invention.
Figure 8 is a perspective view of the apparatus for removing excess water from a block of tofu according to an alternate embodiment of the invention.

### BRIEF DESCRIPTION OF THE PRESENTLY PREFERRED AND ALTERNATE EMBODIMENTS

Prior to proceeding with the more detailed description of the present invention it should be noted that, for the sake of clarity, identical components which have identical functions have been designated by identical reference numerals throughout the several views illustrated in the drawings.

In a first aspect, there is provided an apparatus, generally designated 10, for removing excess moisture from blocks of tofu as commonly sold in grocery and health food stores. The apparatus 10 comprises an open top container member 2 for holding at least one block of tofu, such container member 2 having a first predetermined shape and a predetermined inner surface area of a bottom wall of such open top container 2. A first means is disposed within the open top container 2 having a bottom surface thereof for engagement with an upper surface of such at least one block of tofu 15. A biasing means 12 has a first end thereof engageable with an upper surface of the first means for exerting a downward pressure thereon. A second means is engageable with the open top container 2 adjacent an open end thereof, a second end of such biasing means is engageable with the second means adjacent a surface thereof facing the upper surface of such first means and a third means is disposed adjacent an opposed outer end of such second means for retaining such second means on the open top container while biasing such first means against such block of tofu 15.

Such first means includes a first substantially flat plate member 4 and further includes a raised portion 8 on an upper surface thereof for engagement with the first end of the biasing means 12.

Such second means includes a second substantially flat plate member 6, such second substantially flat plate member 6 has an aperture centrally disposed therein. Such second means further includes a handle member 14. Such handle member 14 is substantially hollow and is disposed substantially at a center portion on an upper surface of the second substantially flat plate member 6 wherein the substantially hollow handle member 14 is engageable with the aperture disposed on such second substantially flat plate member 6.

The second end of the biasing means 12 is engageable with an inner portion of such substantially hollow handle member 14.

The third means includes a pair of arm-like projections 16 disposed on upper surfaces and on opposite sides thereof of the open top container member 2 for engagement with the second substantially flat plate member 6.

It should be noted that such biasing means 12 is compressed when the second substantially flat plate member 6 is forcibly engaged with the pair of arm like projections 16 and the first end of the biasing means 12 is engaged with the raised portion 8 on the first substantially flat plate member 4.

In an alternate embodiment, such second substantially flat plate member 6 further includes a pair of pivotable latch members 18 that are disposed on opposed ends of the second substantially flat plate member 6 for engagement with notches 19 disposed on radially opposed outer walls of the open top container member 2 closely adjacent an upper end thereof. In this aspect the biasing means 12 is compressed when such pair of pivotable latch members 18 disposed on the second substantially flat plate member 6 are engaged with the notches 19 on the radially opposed outer walls of the open top container 2 and the first end of the biasing means 12 is engaged with the raised portion 8 on the first substantially flat plate member 4.

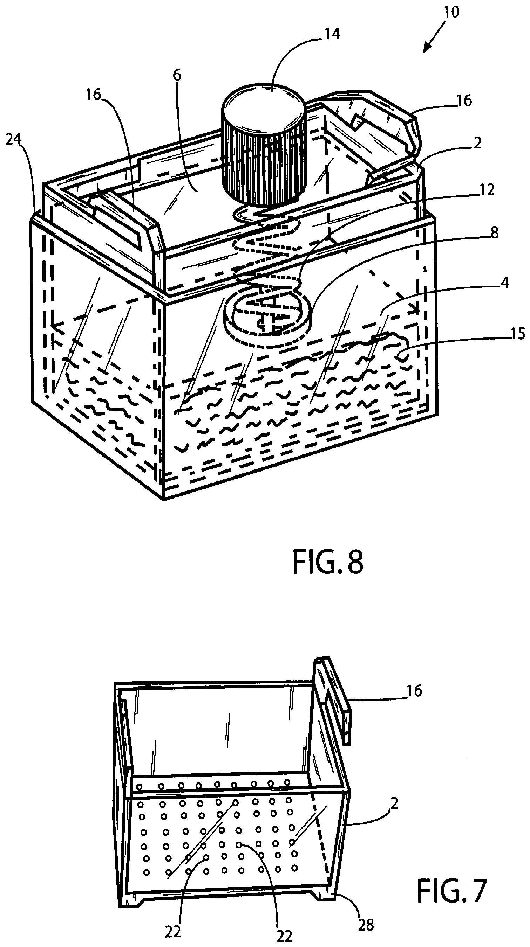

In yet another alternate embodiment, such open top container (inner container) 2 has perforations 22 on a bottom portion of the inner container 2. In this embodiment such container can be placed in a sink and the excess water that is removed from the block of tofu just drains into the sink, or such open top (inner) container 2 can be placed into another container (outer container) 24 and the excess water collected in the outer container member 24. This is seen in Figure 8. The inner container 2 with the drained tofu therein is removed and the water in the outer container 24 poured out. In this embodiment the outer container 24 can be used to store the tofu 15 in a refrigerator with the lid member 34 placed on top of the outer container 24 while the tofu is being marinated prior to use.

In a second aspect, there is provided an apparatus, generally designated 10, for removing excess moisture from blocks of tofu as commonly sold in grocery and health food stores. The apparatus 10 comprises an open top container member 2 which has a first predetermined shape and a first predetermined surface area. The container member 2 is for holding at least one block of tofu 15. A pair of arm-like projections 16 are disposed on upper surfaces and on opposite sides of the container member 2. A first substantially flat plate member 4 having a second predetermined surface area which is less that the first predetermined surface area by an amount at least sufficient to allow moisture to flow to a surface above an upper surface of such tofu 3, the first substantially flat plate member 4 is disposed inside the container member 2 and placed on top of such at least one block of tofu 15. Such first substantially flat plate member 4 having at least one raised portion 8 disposed on an upper surface thereof. A second substantially flat plate member 6 engages the pair of arm-like projections 16. A handle member 14 is disposed on an upper surface of the second substantially flat plate member 6 and a biasing means 12 is caged between an inner surface of the handle member 14 and such upper surface of the first substantially flat plate member 4 for pressing excess moisture out of such at least one block of tofu 15.

It should be noted that such biasing means 12 is preferably a spring 12. The spring 12 is compressed when the second flat platform member 6 is forcibly engaged with the pair of arm-like projections 16 and the opposite end of the biasing means 12 is disposed within the raised portion 8 and engages the upper surface of the first substantially flat member 4.

As the spring 12, which was compressed, attempts to return to its uncompressed position pressure is applied to the first flat plate member 4 which in turn applies pressure to the block of tofu 15 causing excess water to be forced out of the block of tofu. The excess water is collected above the first flat plate member 6 since, as stated previously, the second predetermined surface area of the first plate member 4 is less that the first predetermined surface area by an amount at least sufficient to allow moisture to flow to a surface above an upper surface of such tofu 15. The water that has been collected above first plate member 4 is just poured out of the container member 2.

The second substantially flat member 6 has a pair of notches 26 disposed on diagonally opposed corners which makes it easier to engage the arm-like projections 16. It should be noted that such container member 2 has feet 28 disposed on each corner. It is presently preferred that such container member 2 is formed of plastic. It is also preferred that such first 4 and second flat plate members 6 be made of plastic. It is also preferred that such pair of arm like projections 16 are integrally formed as a part of the container member 2.

It is preferred that such handle member 14 is substantially hollow and that the substantially hollow handle member 14 further includes a means, generally designated 30, for engaging an upper end of the spring 12. Such means 30 includes a pair of pins 32 that are disposed inwardly on radially opposed sides of the handle member 14. It is also presently preferred that such substantially hollow handle member 14 is formed onto the upper surface of second substantially flat plate member 6.

Such arm-like projections 16 that are disposed on upper surfaces and opposite sides of such container member 2 can point in the same direction or in opposite directions. However, it is presently preferred that such arm-like projections 16 point in opposite directions.

Thus, the block of tofu 15 is placed in the container member 2 and the first flat plate member 4 is placed on top of the tofu 15. The second flat plate member 6 with the biasing means attached engages the arm-like projections 16 and the biasing means 12 is disposed within the raised portion 8 and engages the upper surface of first flat plate member 4. The biasing means 12 (spring) applies pressure to the first flat plate member 4 which causes the block of tofu 15 to be squeezed and excess water to be removed. Since the excess water may require some time to be squeezed out of the tofu 15, the apparatus 10, with the block of tofu inside, can be stored in the refrigerator while the excess water is being removed from the tofu 15. After the excess water has been removed, the excess water is then discarded and the prepared block of tofu 15 in the container member 2 can be stored in the refrigerator again. A marinade can be poured on top of the tofu 15 and a lid placed on top of the container 2 and stored in the refrigerator. After the tofu has been marinated with the appropriate marinade it is now ready for further use.

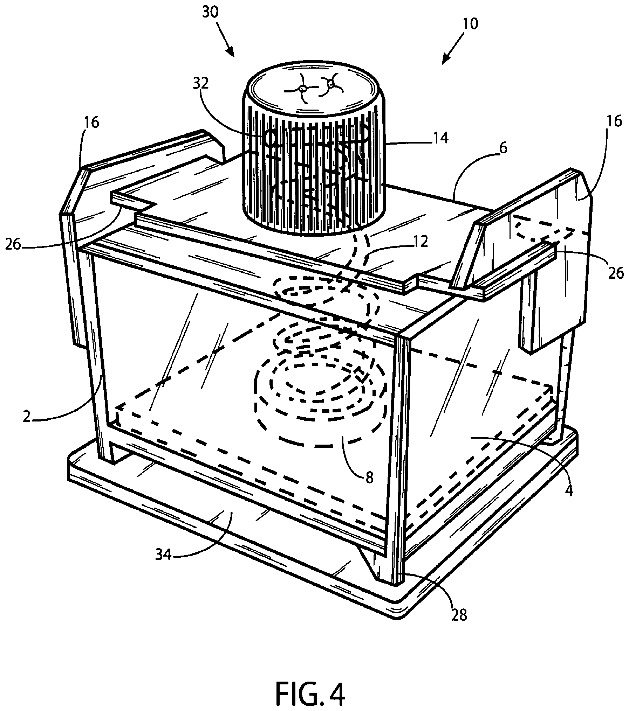

Another embodiment is seen in Figure 4 wherein the lid member 34 snaps onto the feet 28 of the container member 2. This is a means for storing the lid member 34 when it is not being used as a lid 34, thus, conveniently keeping everything in one place so that parts do not get lost.

In yet another aspect, there is provided a method for removing excess moisture from blocks of tofu as commonly sold in grocery and health food stores. The method comprises the steps of providing a container member 2. Such container member 2 has a first predetermined shape and a first predetermined surface area and having a pair of arm-like projections 16 disposed on upper surfaces and on opposite sides of the container member 2. This is followed by a step of placing at least one block of tofu 15 in the container member 2. The next step is placing a first substantially flat plate member 4 inside the container member on top of such at least one block of tofu 15, such first substantially flat plate member 4 having a second predetermined surface area which is less that such first predetermined surface area by an amount at least sufficient to allow moisture to flow to a surface above an upper surface of such tofu 15. Such first substantially flat plate member 4 has at least one raised portion 8 on an upper surface thereof. This is followed by the step of engaging a second substantially flat plate member 6, having a handle member 14 disposed on an upper surface thereof and having a biasing means 12 connected to an inner surface of such handle member 14, with the pair of arm like projections 16 disposed on upper surfaces and on opposite sides of the container member 2. There is a step of caging the biasing means 12 between such upper surface of the first substantially flat plate member 4 and an inner surface of such handle member 14 when the second substantially flat plate member 6 is engaged with the pair of arm-like projections 16, such one end of the biasing means 12 is disposed within such raised portion 8 on the upper surface of the first plate member 4. There is a step of applying pressure on the block of tofu 15 by the first substantially flat plate member 4. Such first substantially flat plate member 4 being forced downward by the biasing means 20.

The next step is removing water from the block of tofu 15 by the pressure exerted by the first substantially flat plate member 4 as a result of the action of the biasing means 12. There is a step of placing the apparatus 10 in the refrigerator after excess water is starting to be removed from the tofu 15. This is done to insure that the tofu 15 is not exposed to room temperatures any more than necessary since the removal of excess water *may* require some time. This step may be omitted; however, if it takes considerable time for the excess water to be removed that this step becomes important for hygienic or healthful reasons.

There is a step of collecting the excess water removed from the block of tofu 15 above such first substantially flat plate member 4 and a step of pouring out the excess water removed from the block of tofu 15. Next there is a step of returning the apparatus 10 with the tofu 15 in the container member 2, with excess water removed, to a refrigerated area until ready for use. A step of placing the lid member 34 on top of a container member is done before the container member is returned to the refrigerator. There can be the additional step of adding a marinade to the block of tofu, with excess water removed, that stored in the container member 2 in a refrigerated area.

In yet another embodiment, as seen in Figures 7 and 8, there is provided an apparatus 10 for removing excess moisture from blocks of tofu 15 as commonly sold in grocery and health food stores. The apparatus 10 comprises an outer container member 24 having a first predetermined size and a first predetermined shape. An inner container member 2 is disposed inside the outer container member 24 for holding a block of tofu 15, such inner container member 2 has a second predetermined size and a second predetermined shape, such inner container member 2 having a plurality of apertures or perforations 22 formed through a bottom portion of the inner container member 2. A pair of arm-like projections 16 pointing in opposite directions are disposed on upper surfaces and on opposite sides of the inner container member 2. A first substantially flat plate member 4 is disposed inside the inner container member 2 and placed on top of such block of tofu 15, such first substantially flat plate member 4 has at least one raised portion 8 on an upper surface and centrally disposed on the first substantially flat plate member 4. A second substantially flat plate member 6 is engageable with a upper surface of such inner container member 2 and further engages the pair of arm-like projections 16. There is at least one biasing means 12 connected to a bottom surface of the second substantially flat plate member 6 and is caged between the at least one raised portion 8 on the upper surface of the first substantially flat plate member 4 and the bottom surface of the second substantially flat plate member 6 for pushing against such block of tofu for pressing excess moisture out of such block of tofu 15. It is understood, as described previously, that the biasing means 12 can be caged between the inner surface of such handle member 14 and the at least one raised portion 8 on the upper surface of the first substantially flat plate member 4.

Thus, the present invention provides an apparatus and a method for easily removing excess moisture from blocks of tofu. The apparatus can be constructed of a sturdy plastic material and is generally having a substantially box or rectangular shape since presently most commercial tofu is sold in this shape. However, it is within the scope of the invention that such shape could be circular or another shape if the commercial suppliers of tofu would change the shape. It is designed to be approximately the size of a block of commercially available tofu. The base of the container unit that holds the tofu features four feet on the corners. There is a first flat plate member that is disposed within the container and sits on the top of the tofu and a second flat plate member that has a spring attached to it. The second flat plate member engages a pair of arm-like projections disposed on upper surfaces and on opposite sides of the container. The spring engages the first plate member that sits on the top of the tofu so that as the spring exerts pressure on the first flat plate member sitting on the tofu excess water is removed from the tofu.

## Claims

1. An apparatus for removing excess moisture from blocks of tofu (15) as commonly sold in grocery and health food stores, said apparatus (10) comprising:
(a) an open top container member (2) for holding at least one block of tofu (15), said container member (2) having a first predetermined shape and a predetermined inner surface area;
(b) a pair of arm-like projections (16) disposed on upper surfaces and on opposite sides of said container member (2);
(c) a first substantially flat plate member (4) having a predetermined surface area which is less than said predetermined inner surface area of said container member (2) by an amount at least sufficient to allow moisture to flow to a surface above an upper surface of such tofu (15), wherein said first plate member (4) is disposed inside said container member (2) and placeable on top of said block of tofu (15), and wherein said first plate member (4) has at least one raised portion (8) on an upper surface thereof;
(d) a second substantially flat plate member (6) for engagement with said pair of arm-like projections (16)
(e) a handle member (14) disposed on an upper surface of said second plate member (6); and
(f) at least one biasing means (12) caged between an inner surface of said handle member (14) and said upper surface of said first plate member (4) for pressing excess moisture out of such at least one block of tofu (15);
(g) wherein said biasing means (12) is compressed when said second plate member (6) is forcibly engaged with said pair of arm-like projections (16); and
(h) wherein an opposite end of said biasing means (12) is disposed within said raised portion (8) and engages said upper surface of said first plate member (4) .

2. The apparatus according to claim 1, wherein excess moisture removed from said block of tofu (5) is collected above said first plate member (4).

3. The apparatus according to claim 1, wherein said handle member (14) is substantially hollow.

4. The apparatus according to claim 1, wherein said second plate member (6) has a pair of notches (26) disposed on diagonally opposed corners for engagement with said arm-like projections (16).

5. The apparatus according to claim 1, wherein said container member (2) comprises feet (28) at each corner.

6. The apparatus according to claim 5, further comprising a lid member (34) that snaps onto the feet (28) of the container member (2).

7. A method for removing excess moisture from blocks of tofu (15) by means of an apparatus (10) as claimed in claim 1, said method comprising the steps of:
(a) providing said container member (2) and disposing said pair of arm-like projections (16) on upper surfaces and on opposite sides of said container member (2);
(b) placing a block of tofu (15) in said container member (2) ;
(c) placing said first plate member (4) inside said container member (2) on top of said block of tofu (15);
(d) engaging said second plate member (6) with said pair of arm-like projections (16) disposed on upper surfaces and on opposite sides of said container member (2);
(e) caging said biasing means (12) between said upper surface of said first plate member (4) and said inner surface of said handle member (14) when said second plate member (6) is engaged with said pair of arm-like projections (16);
(f) applying pressure on said block of tofu (15) by said first plate member (4), wherein said first plate member (4) is being forced downward by said biasing means (12);
(g) removing water from said block of tofu (15) by said pressure and forcing;
(h) storing said apparatus (10) in a refrigerator while excess water is being removed from said tofu (15);
(i) collecting water removed from said tofu (15) above said first plate member (4);
(j) pouring off said water collected above said first plate member (4); and
(k) returning said container member (2) with tofu (15) therein, with excess water removed, to a refrigerated area until ready for use.

8. The method according to claim 7, further including a step of compressing said biasing means (12) when said biasing means being caged between said at least one raised portion (8) disposed on said upper surface of said first plate member (4) and said inner surface of said handle member (14) disposed on said second plate member (6) when said second plate member (6) is forcibly engaged with said pair of arm-like projections (16) .

9. The method according to claim 7, wherein said method further includes a step, after step (j), of placing a lid member on top of said container member (2) before returning said container member to said refrigerated area.

10. The method according to claim 7, wherein said method further includes a step of marinating said tofu (15) stored in said container member (2).

## Patentansprüche

1. Vorrichtung zum Entfernen von überschüssiger Feuchtigkeit aus Tofublöcken (15), welche üblicherweise in Lebensmittelgeschäften und Reformhäusern verkauft werden, wobei die Vorrichtung (10) umfasst:
(a) ein oben offenes Behälterelement (2) zum Halten mindestens eines Tofu-Blocks (15), wobei das Behälterelement (2) eine erste vorbestimmte Form und einen vorbestimmten inneren Flächeninhalt aufweist;
(b) ein Paar armartige Vorsprünge (16), welche auf oberen Oberflächen und auf gegenüberliegenden Seiten des Behälterelements (2) angeordnet sind;
(c) ein erstes im Wesentlichen flaches Plattenelement (4), welches einen vorbestimmten Flächeninhalt aufweist, welcher um einen Betrag kleiner ist als der vorbestimmte innere Flächeninhalt des Behälterelements (2), der zumindest ausreichend ist, um Feuchtigkeit zu einer Oberfläche oberhalb einer Oberfläche des Tofublocks (15) fließen zu lassen, wobei das erste Plattenelement (4) in dem Behälterelement (2) angeordnet ist, und auf dem Tofublock (15) platzierbar ist, und wobei das erste Plattenelement (4) zumindest eine Erhebung (8) auf einer oberen Oberfläche des Plattenelements (4) aufweist;
(d) eine zweites im Wesentlichen flaches Plattenelement (6) zum Eingriff mit dem Paar armartiger Vorsprünge (16);
(e) ein Griffelement (14), welches auf einer oberen Oberfläche des zweiten Plattenelements (6) angeordnet ist; und
(f) zumindest ein Vorspannmittel (12), welches zwischen einer inneren Oberfläche des Griffelements (14) und der oberen Oberfläche des ersten Plattenelements (4) gesperrt ist, um überschüssige Feuchtigkeit aus dem zumindest einen Tofublock (15) zu pressen;
(g) wobei das Vorspannmittel (12) komprimiert ist, wenn das zweite Plattenelement (6) mit dem Paar armartige Vorsprünge (16) zwangsweise in Eingriff gebracht wird; und
(h) wobei ein gegenüberliegendes Ende des Vorspannmittels (12) in der Erhebung (8) angeordnet ist und in die obere Oberfläche des ersten Plattenelements (4) eingreift.

2. Vorrichtung nach Anspruch 1, wobei überschüssige Feuchtigkeit, welche von dem Tofublock (15) entfernt wurde, über dem ersten Plattenelement (4) gesammelt wird.

3. Vorrichtung nach Anspruch 1, wobei das Griffelement (14) im Wesentlichen hohl ist.

4. Vorrichtung nach Anspruch 1, wobei das zweite Plattenelement (6) ein Paar Kerben (26) aufweist, welche zum Eingriff mit den armartigen Vorsprüngen auf diagonal gegenüberliegenden Ecken angeordnet sind.

5. Vorrichtung nach Anspruch 1, wobei das Behälterelement (2) in jeder Ecke Füße (28) aufweist.

6. Vorrichtung nach Anspruch 5, ferner umfassend ein Deckelelement (34), welches auf die Füße (28) des Behälterelements (2) schnappt.

7. Verfahren zum Entfernen von überschüssiger Feuchtigkeit von Tofublöcken (15) mittels einer Vorrichtung (10) gemäß Anspruch 1, wobei das Verfahren die Schritte umfasst:
(a) Bereitstellen des Behälterelements (2) und Anordnen des Paares armartiger Vorsprünge (16) auf oberen Oberflächen und auf gegenüberliegenden Seiten des Behälterelements (2);
(b) Platzieren eines Tofublocks (15) in dem Behälterelement (2);
(c) Platzieren des ersten Plattenelements (4) innerhalb des Behälterelements (2) oben auf dem Tofublock (15);
(d) Eingreifen des zweiten Plattenelements (6) mit dem Paar armartiger Vorsprünge (16), welche auf oberen Oberflächen und auf gegenüberliegenden Seiten des Behälterelements (2) angeordnet sind;
(e) Sperren des Vorspannmittels (12) zwischen der oberen Oberfläche des ersten Plattenelements (4) und der inneren Oberfläche des Griffelements (14), wenn das zweite Plattenelement (6) mit dem Paar armartiger Vorsprünge (16) in Eingriff gebracht ist;
(f) Aufbringen von Druck auf den Tofublock (15) durch das erste Plattenelement (4), wobei das erste Plattenelement (4) durch das Vorspannmittel (12) nach unten getrieben wird;
(g) Entfernen von Wasser von dem Tofublock (15) mittels des Drucks und des Treibens;
(h) Aufbewahren der Vorrichtung (10) in einem Kühlschrank während das überschüssige Wasser von dem Tofu (15) entfernt wird;
(i) Sammeln von Wasser, welches von dem Tofu (15) entfernt wurde über dem ersten Plattenelement (4);
(j) Abgießen des Wassers, welches über dem ersten Plattenelement (4) gesammelt wurde; und
(k) Rückführung des Behälterelements (2) mit dem Tofu (15) darin und dem überschüssigen Wasser entfernt in einen gekühlten Bereich bis zur Verwendung.

8. Verfahren nach Anspruch 7, ferner umfassend den Schritt des Komprimierens des Vorspannmittels (12), wenn das Vorspannmittel zwischen der zumindest einen Erhebung (8), welche auf der oberen Oberfläche des ersten Plattenelements (4) angeordnet ist, und der inneren Oberfläche des Griffelements (14), welches auf dem zweiten Plattenelement (6) angeordnet ist, gesperrt ist, wenn das zweite Plattenelement (6) zwangsweise mit dem Paar armartiger Vorsprünge (16) in Eingriff gebracht ist.

9. Verfahren nach Anspruch 7, wobei das Verfahren ferner, nach dem Schritt (j), einen Schritt des Anordnens eines Deckelelements oben auf dem Behälterelement (2) vor dem Zurückführen des Behälterelements in den gekühlten Bereich umfasst.

10. Verfahren nach Anspruch 7, wobei das Verfahren ferner den Schritt des Marinierens des Tofus (15), welches in dem Behälterelement (2) gelagert ist, umfasst.

## Revendications

1. Appareil pour éliminer l'excédent d'humidité de blocs de tofu (15) généralement vendus dans des épiceries et magasins d'aliments diététiques, ledit appareil (10) comprenant:
(a) un organe récipient à dessus ouvert (2) pour contenir au moins un bloc de tofu (15), ledit organe récipient (2) ayant une première forme prédéterminée et une superficie intérieure prédéterminée;
(b) une paire de saillies de type bras (16) disposées sur des surfaces supérieures et sur des côtés opposés dudit organe récipient (2);
(c) un premier organe plaque sensiblement plat (4) ayant une superficie prédéterminée qui est inférieure à ladite superficie intérieure prédéterminée dudit organe récipient (2) d'une quantité au moins suffisante pour permettre à l'humidité de s'écouler jusqu'à une surface au-dessus d'une surface supérieure de ce tofu (15), dans lequel ledit premier organe plaque (4) est disposé à l'intérieur dudit organe récipient (2) et peut être placé par-dessus ledit bloc de tofu (15), et dans lequel ledit premier organe plaque (4) a au moins une portion relevée (8) sur une surface supérieure de celui-ci;
(d) un second organe plaque sensiblement plat (6) pour une mise en prise avec ladite paire de saillies de type bras (16);
(e) un organe poignée (14) disposé sur une surface supérieure dudit second organe plaque (6); et
(f) au moins un moyen de sollicitation (12) encagé entre une surface intérieure dudit organe poignée (14) et ladite surface supérieure dudit premier organe plaque (4) pour exprimer l'excédent d'humidité de cet au moins un bloc de tofu (15);
(g) dans lequel ledit moyen de sollicitation (12) est comprimé lorsque ledit second organe plaque (6) est mis en prise de force avec ladite paire de saillies de type bras (16); et
(h) dans lequel une extrémité opposée dudit moyen de sollicitation (12) est disposée au sein de ladite portion relevée (8) et se met en prise avec ladite surface supérieure dudit premier organe plaque (4).

2. Appareil selon la revendication 1, dans lequel l'excédent d'humidité éliminé dudit bloc de tofu (15) est recueilli au-dessus dudit premier organe plaque (4).

3. Appareil selon la revendication 1, dans lequel ledit organe poignée (14) est sensiblement creux.

4. Appareil selon la revendication 1, dans lequel ledit second organe plaque (6) a une paire d'encoches (26) disposées sur des coins opposés en diagonale pour se mettre en prise avec lesdites saillies de type bras (16).

5. Appareil selon la revendication 1, dans lequel ledit organe récipient (2) comprend des pieds (28) à chaque coin.

6. Appareil selon la revendication 5, comprenant en outre un organe couvercle (34) qui s'encliquette sur les pieds (28) de l'organe récipient (2).

7. Procédé d'élimination d'excédent d'humidité de blocs de tofu (15) au moyen d'un appareil (10) selon la revendication 1, ledit procédé comprenant les étapes de:
(a) fourniture dudit organe récipient (2) et disposition de ladite paire de saillies de type bras (16) sur des surfaces supérieures et sur des côtés opposés dudit organe récipient (2);
(b) placement d'un bloc de tofu (15) dans ledit organe récipient (2);
(c) placement dudit premier organe plaque (4) à l'intérieur dudit organe récipient (2) par-dessus ledit bloc de tofu (15);
(d) mise en prise dudit second organe plaque (6) avec ladite paire de saillies de type bras (16) disposées sur des surfaces supérieures et sur des côtés opposés dudit organe récipient (2);
(e) encagement dudit moyen de sollicitation (12) entre ladite surface supérieure dudit premier organe plaque (4) et ladite surface intérieure dudit organe poignée (14) lorsque ledit second organe plaque (6) est mis en prise avec ladite paire de saillies de type bras (16);
(f) application de pression sur ledit bloc de tofu (15) par ledit premier organe plaque (4), dans lequel ledit premier organe plaque (4) est forcé vers le bas par ledit moyen de sollicitation (12);
(g) élimination d'eau dudit bloc de tofu (15) par ladite pression et ledit forçage;
(h) stockage dudit appareil (10) dans un réfrigérateur tandis que l'excédent d'eau est éliminé dudit tofu (15);
(i) recueil de l'eau éliminée dudit tofu (15) au-dessus dudit premier organe plaque (4);
(j) vidage de ladite eau recueillie au-dessus dudit premier organe plaque (4); et
(k) retour dudit organe récipient (2) avec le tofu (15) à l'intérieur, avec l'excédent d'eau ayant été éliminé, dans une zone réfrigérée jusqu'à ce qu'il soit prêt pour l'utilisation.

8. Procédé selon la revendication 7, comportant en outre une étape de compression dudit moyen de sollicitation (12) lorsque ledit moyen de sollicitation est encagé entre ladite au moins une portion relevée (8) disposée sur ladite surface supérieure dudit premier organe plaque (4) et ladite surface intérieure dudit organe poignée (14) disposé sur ledit second organe plaque (6) lorsque ledit second organe plaque (6) est mis en prise de force avec ladite paire de saillies de type bras (16).

9. Procédé selon la revendication 7, dans lequel ledit procédé comporte en outre une étape, après l'étape (j), de placement d'un organe couvercle par-dessus ledit organe récipient (2) avant le retour dudit organe récipient dans ladite zone réfrigérée.

10. Procédé selon la revendication 7, dans lequel ledit procédé comporte en outre une étape de marinage dudit tofu (15) stocké dans ledit organe récipient (2).
